Europäisches Patentamt

European Patent Office

Office européen des brevets

(11) Veröffentlichungsnummer : **0 112 855**
**B1**

(12) # EUROPÄISCHE PATENTSCHRIFT

(45) Veröffentlichungstag der Patentschrift :
16.04.86

(51) Int. Cl.⁴ : **A 23 J   1/06**

(21) Anmeldenummer : **83901894.2**

(22) Anmeldetag : **30.06.83**

(86) Internationale Anmeldenummer :
**PCT/CH 83/00084**

(87) Internationale Veröffentlichungsnummer :
**WO/8400098 (19.01.84 Gazette 84/02)**

(54) VERFAHREN ZUR HERSTELLUNG VON EIWEISSKONZENTRATEN MIT FESTER BIS GELARTIGER KONSISTENZ AUS TIERISCHEM BLUT UND/ODER BLUTPLASMA.

(30) Priorität : **02.07.82 CH 4067/82**

(43) Veröffentlichungstag der Anmeldung :
**11.07.84 Patentblatt 84/28**

(45) Bekanntmachung des Hinweises auf die Patenterteilung : **16.04.86 Patentblatt 86/16**

(84) Benannte Vertragsstaaten :
**AT BE DE FR GB LU NL SE**

(56) Entgegenhaltungen :
**FR-A- 1 382 451**
**FR-A- 2 481 143**
**GB-A- 2 002 218**

(73) Patentinhaber : **BELL AG**
**Elsässerstrasse 184**
**CH-4056 Basel (CH)**

(72) Erfinder : **KARASEK, Jaroslav**
**Parkstrasse 33**
**CH-4102 Binningen (CH)**
Erfinder : **NYFELER, Beat**
**Holeeholzweg 63**
**CH-4102 Binningen (CH)**
Erfinder : **SCHINDELHOLZ, Markus**
**Aumattstrasse 110**
**CH-4153 Reinach (CH)**

(74) Vertreter : **Becher, Pauline, Dr. et al**
**A. Braun, Braun, Héritier, Eschmann AG Holbeins-**
**trasse 36-38**
**CH-4051 Basel (CH)**

## Beschreibung

In den schweizerischen Schlachthöfen wurden 1980 ca. 3,3 Millionen Schweine, 480 000 Stück Grossvieh und knapp 400 000 Kälber geschlachtet. Bei einem Blutanfall von 2 bis 2,5 Liter pro Schwein, 12 bis 15 Liter pro Stück Grossvieh und von 1 bis 3,5 Liter pro Kalb lässt sich ein jährlicher Blutanfall von ca. 14,3 Millionen Liter, enthaltend 2,5 Millionen kg Protein, berechnen.

Noch heute geht ein grosser Teil dieses ernährungsphysiologisch hochwertigen Bluteiweisses für die menschliche Ernährung verloren, weil der traditionellen Verwertung von Blut und Plasma in der Fleischwarenherstellung Grenzen gesetzt sind und deshalb Blut verworfen, d. h. der Kanalisation zugeführt, oder zur Herstellung von Futter- und Düngemitteln sowie für technische Zwecke verwendet wird.

Die Gründe dafür, dass Blut (mit ca. 17 Gew.- % Eiweiss) und das daraus durch Zentrifugieren gewonnene Plasma (Ausbeute ca. 60 Gew.- % mit 6 bis 7 Gew.- % Eiweiss) nur in beschränktem Umfang für die menschliche Ernährung genutzt wird, sind vielfältig. Neben der traditionellen Verarbeitung von Blut zu verschiedenen Blutwürsten und von Plasma in Brühwürsten sowie lebensmittelrechtlichen Vorschriften sind vor allem die spezifischen sensorischen Eigenschaften (hauptsächlich Farbe und Geschmack), die beschränkten technologischen Anwendungsmöglichkeiten und nicht zuletzt die ausgesprochen starke Anfälligkeit von Blut und Plasma für den mikrobiologischen Verderb Gründe, weshalb die Bluteiweisse in der Fleischwarenindustrie nur in geringen Mengen verwendet werden. Diese Umstände finden ihren Ausdruck im tiefen Marktwert des Blutes.

Die Anstrengungen, das Schlachttierblut wegen seines hohen Protein- und Eisengehaltes über die traditionelle Verarbeitung hinaus besser für die menschliche Ernährung nutzbar zu machen, haben in den letzten Jahren stark zugenommen. Schwerpunkte bilden die Gewinnung des Haems für die pharmazeutische Industrie, das Haltbarmachen von Blut und Plasma durch Pasteurisation und verschiedene Trocknungsverfahren, die Verbesserung der sensorischen Eigenschaften, z. B. durch Entfärben, die Konzentrierung der Plasmaproteine, z. B. durch Ultrafiltration, und die Veränderung der technologischen und sensorischen Eigenschaften durch Verspinnen von Proteinen, welche meist durch chemische Koagulation aus dem flüssigen Rohmaterial gewonnen werden. Angaben über die Verwertung von Schlachtblut finden sich zum Beispiel in

Fleischwirtschaft 58 (5) Seiten 795- 800 (1978)
Fleischwirtschaft 58 (12) Seiten 1944-1948 (1978)
Fleischwirtschaft 59 (5) Seiten 730- 732 (1979)
Fleischwirtschaft 59 (9) Seiten 1252-1257 (1979)
Fleischwirtschaft 60 (4) Seiten 652- 658 (1980)
Fleischwirtschaft 61 (1) Seiten 30- 33 (1981)
Fleischwirtschaft 61 (9) Seiten 1272-1273 (1981)
Fleischwirtschaft 61 (9) Seiten 1393-1395 (1981)

Aufgabe der Erfindung ist es, tierisches Blut und/oder Blutplasma zu konzentrieren, mikrobiologisch haltbar zu machen, durch die Entfernung von Wasser und wasserlöslichen Stoffen geruchlich und geschmacklich zu verbessern und technologisch so zu verändern, dass neue Anwendungsmöglichkeiten eröffnet werden. Das erfindungsgemässe Verfahren eignet sich vor allem für das Konzentrieren von tierischem Blutplasma, das wegen seiner Farbe in der Regel für die Verarbeitung in Lebens- und Futtermitteln bevorzugt wird, lässt sich aber auch auf Blut und zwecks Beeinflussung der Farbe oder zur Erhöhung des Eisengehaltes auf Gemische von Blut oder Dickblut mit Plasma anwenden. Die Eigenschaften des Endproduktes hängen nicht nur vom verwendeten Ausgangsmaterial, sondern auch von der Wahl der Verfahrensparameter ab.

Bekanntlich wird tierisches Blut durch Zentrifugieren in Dickblut, das in erster Linie aus Blutkörperchen besteht, und Plasma zerlegt. Plasma enthält praktisch keine Zellen und kein Fett ; es enthält aber ca. 0,7 Gew.- % Mineralstoffe und 6 bis 7 Gew.- % Protein.

Das erfindungsgemässe Verfahren ist dadurch gekennzeichnet, dass man tierisches Blut und/oder Blutplasma durch Erhitzen auf eine Kerntemperatur von 75 bis 100 °C vollständig koaguliert, danach möglichst rasch auf eine Kerntemperatur von ca. 0 °C abkühlt und das Koagulat von dem freigesetzten Wasser abtrennt.

Vorzugsweise setzt man dem tierischen Blut und/oder Blutplasma vor der Hitzekoagulation Nitritpökelsalz und gewünschtenfalls auch Aromastoffe zu.

Das Erhitzen kann chargenweise im Wasser- oder Dampfkochschrank oder auch kontinuierlich erfolgen. Das Halten der Kerntemperatur von 75 bis 100 °C während einiger Zeit verbessert den bakteriologischen Zustand des Koagulates und erhöht geringfügig dessen Festigkeit, trägt aber kaum zur Erhöhung des Eiweissgehaltes bei.

Bei der Hitzekoagulation werden die Eiweissstoffe vollständig denaturiert. Es bilden sich Wasserdampfblasen in dem Koagulat, und mindestens die vegetativen Keime werden abgetötet, so dass das Koagulat mikrobiologisch haltbar gemacht wird.

Nach dem Erhitzen und dem möglichst raschen Abkühlen auf eine Kerntemperatur von ca. 0 °C kann das Koagulat zerkleinert und das beim Erhitzen freigesetzte locker gebundene Wasser z. B. durch Abpressen oder Abzentrifugieren aus den gebildeten Blasen entfernt werden.

Wenn das Koagulat jedoch nach dem Abkühlen möglichst langsam eingefroren wird, so lässt sich die Menge des später mechanisch abtrennbaren Wassers deutlich erhöhen. Durch langsames Einfrieren und Lagerung gegebenenfalls in verpacktem Zustand bei nicht zu tiefen Temperaturen unterhalb des Gefrierpunktes, z. B. bei −5 bis −10 °C während einiger Tage bis vorzugsweise max. 6 Monate, friert vor allem Wasser aus, das in den beim Erhitzen gebildeten Blasen locker gebunden ist.

Das durch das Erhitzen und allfällige Ausfrieren freigesetzte Wasser kann nach der Vorzerkleinerung des Koagulats durch Abtropfenlassen, Abpressen, Abzentrifugieren oder ähnliche mechanische Trennverfahren entfernt werden.

Das erfindungsgemässe Verfahren hat den Vorteil, dass es aus einer Folge von rein physikalischen Verfahrensschritten besteht. Die dafür benötigten Einrichtungen sind in Schlachthöfen und Fleischwarenfabriken grösstenteils vorhanden, so dass die Verfahrenskosten relativ niedrig sind.

Nach dem erfindungsgemässen Verfahren können je nach dem Ausgangsmaterial Eiweisskonzentrate mit fester bis gelartiger Konsistenz mit Eiweissgehalten von bis zu 30 Gew.- % hergestellt werden. Im Hinblick auf ihre Farbe sind vor allem die aus tierischem Blutplasma hergestellten Eiweisskonzentrate für die Lebensmittelproduktion interessant.

Infolge der hygienischen Herstellung der Eiweisskonzentrate sind im Hitzekoagulat keine vegetativen Keime und im fertigen Eiweisskonzentrat keine Enterobacteriaceae nachweisbar. Dank diesem mikrobiologisch einwandfreien Zustand können die erfindungsgemäss hergestellten Eiweisskonzentrate bei Temperaturen von ca. 0 °C ca. 1 Woche gelagert und für die Herstellung nicht erhitzter Lebensmittel verwendet werden.

Die erfindungsgemäss hergestellten Eiweisskonzentrate sind auch aufgrund ihrer sensorischen und ernährungsphysiologischen Eigenschaften als Zutaten bei der Lebensmittelherstellung geeignet.

Gegebenenfalls werden bei ihrer Herstellung nur einige wenige, lebensmittelrechtlich zulässige Zusatzstoffe verwendet. Bei Verwendung geeigneter Ausgangsmaterialien und Anwendung geeigneter Herstellungsbedingungen kann man Produkte erhalten, die als Rohmaterial für eine wichtige Gruppe von Fleischwaren, z. B. schnittfeste und streichfähige Rohwürste, dienen können.

Wegen der gegenüber dem Ausgangsmaterial veränderten Eigenschaften, insbesondere der mikrobiologischen Stabilität, der festen bis gelartigen Konsistenz, des geringen Wasserbindungsvermögens und der annähernd neutralen sensorischen Eigenschaften ergeben sich für die erfindungsgemäss hergestellten Eiweisskonzentrate neue technologische Anwendungsmöglichkeiten, für die sich die flüssigen Ausgangsmaterialien nicht eignen, und zwar insbesondere in der Fleischwarenindustrie, aber auch bei der Produktion von anderen Lebensmitteln und von Tierfutter.

Aus tierischem Blut hergestellte oder mit Dickblut gefärbte Eiweisskonzentrate kommen wegen ihrer intensiven Farbe weniger für die Lebensmittelproduktion als für die Herstellung von Futtermitteln in Frage. Sie können z. B. als Granulate in Fisch- und Schweinefutter verwendet werden. Wenn die Entfärbung von tierischem Blut und Dickblut lebensmittelrechtlich zugelassen ist, können aus entfärbtem Blut oder mit Dickblut hergestellte Eiweisskonzentrate aber auch vermehrt in der Lebensmittelproduktion verwendet werden.

Aus tierischem Blutplasma hergestellte Eiweisskonzentrate werden vorzugsweise als Granulate verarbeitet, die sich besonders für die Verwendung bei der Herstellung von Rohwurst eignen. Dabei können ca. 10 Gew.- % des Rohmaterials durch ein solches Granulat ersetzt werden, ohne dass die Qualität der Wurst nachteilig beeinflusst wird. Sie wird sogar verbessert.

## Beispiel 1

1a) 50 kg aus möglichst frischem Rinderblut in bekannter Weise gewonnenes Plasma, das 6 bis 7 Gew.- % Eiweiss enthält, werden zwecks Farbstabilisierung sofort nach dem Zentrifugieren mit 2 Gew.- % Nitritpökelsalz (Gemisch von NaCl mit max. 0,6 Gew.- % $NaNO_2$) versetzt. Zur Verbesserung der sensorischen Eigenschaften kann ca. 0,5 Gew.- % Flüssigraucharoma zugegeben werden.

Das so vorbehandelte Rindsplasma wird möglichst umgehend zweckmässigerweise in grosse Plastiksäcke gefüllt (Inhalt ca. 50 Liter, Schichtdicke ca. 10 cm) und im Dampfkochschrank bei einer Raumtemperatur von 90 °C in ca. 5 1/2 Stunden auf eine Kerntemperatur von 82 °C erhitzt.

Nach dem Erhitzen wird das koagulierte Plasma in den Plastiksäcken unter dem fliessenden kalten Wasser in 20 Minuten auf eine Kerntemperatur von ca. 50 bis 60 °C vorgekühlt und anschliessend in einem Kühlraum von 0 °C über Nacht (ca. 15 Stunden) auf eine Kerntemperatur von ca. 1 °C ausgekühlt.

Das ausgekühlte Plasmakoagulat wird auf ca. zwetschgengrosse Stücke zerkleinert und anschliessend das beim Erhitzen freigesetzte Wasser durch Abzentrifugieren bei ca. 240 × g während 5 Minuten entfernt.

Auf diese Weise erhält man bei verlustfreiem Arbeiten 27 kg eines annähernd doppelt konzentrierten Plasmakoagulats mit ca. 12 % Eiweiss, mit blassroter Farbe und annähernd neutralem Geruch und Geschmack.

Unter der Voraussetzung einer guten Schlachthygiene, einer hygienischen Plasmagewinnung sowie

3

0 112 855

einer guten Betriebs- und Personalhygiene beim Zerkleinern und Zentrifugieren des koagulierten Plasmas lassen sich folgende Keimgehalte erreichen : Gesamtkeimzahl aerob mesophil $< 10^4/g$, Enterobacteriaceae $< 10^2/g$, koagulase positive Staphylokokken $< 10^2/g$, Salmonellen nicht nachweisbar in 20 g.

1b) Wenn man das nach 1a) hergestellte Koagulat nach dem Auskühlen während 3 Tagen bei −7 °C langsam auf eine Kerntemperatur von −5 °C einfriert, danach im Plastiksack 4 Stunden im fliessenden kalten Wasser auftaut und in gleicher Weise wie oben zerkleinert und zentrifugiert, erhält man ca. 20 kg eines 2,5-fach konzentrierten Plasmakoagulats mit ca. 16 % Eiweiss mit den gleichen Eigenschaften, jedoch einer etwas festeren Konsistenz.

1c) Wenn man das nach 1a) hergestellte Koagulat nach dem Auskühlen und 3-tägigem Gefrieren bei −7 °C anschliessend noch 3 Tage bei −23 °C lagert, danach im Plastiksack 6 Stunden im fliessenden kalten Wasser auftaut und in gleicher Weise wie oben zerkleinert und zentrifugiert, erhält man ca. 17,5 kg eines annähernd 3-fach konzentrierten Plasmakoagulats mit ca. 18,5 % Eiweiss mit den gleichen Eigenschaften, jedoch gegenüber 1b) noch etwas festeren Konsistenz.

Beispiel 2

Man verfährt wie in Beispiel 1, erhitzt aber nur 4 3/4 Stunden auf eine Kerntemperatur von 80 °C. Nach dem Verfahren 1a) bis 1c) erhält man Plasmakonzentrate mit einem jeweils um 0,3 bis 0,4 % tieferen Eiweissgehalt und einer etwas weicheren Konsistenz bei sonst gleichen Eigenschaften.

Beispiel 3

Man verfährt wie im Beispiel 1, erhitzt aber 30 kg Schweinsplasma mit 6 bis 7 % Eiweiss anstelle des Rindsplasmas bei einer Raumtemperatur von 92 °C in ca. 5 1/2 Stunden auf einer Kerntemperatur von 88 °C. Auf diese Weise erhält man bei verlustfreiem Arbeiten nach Arbeitsvorschrift 1a) ca. 14 kg eines doppeltkonzentrierten Schweinsplasmakoagulats mit 13 % Eiweiss, nach Arbeitsvorschrift 1b) ca. 13 kg Plasmakoagulat mit 15 % Eiweiss und nach Arbeitsvorschrift 1c) ca. 10,5 kg Plasmakoagulat mit 18,6 % Eiweiss.

Die Schweinsplasmakoagulate sind in der Regel heller und bei gleichem Eiweissgehalt etwas weicher als die entsprechenden Rindsplasmakoagulate bei sonst vergleichbaren sensorischen, bakteriologischen und technologischen Eigenschaften.

Beispiel 4

Man verfährt wie im Beispiel 3, hält jedoch die Kerntemperatur noch während 5 1/2 Stunden, so dass die Erhitzungszeit 11 Stunden beträgt. Auf diese Weise erhält man nach Arbeitsvorschrift 1a) bis 1c) Schweinsplasmakoagulate mit den gleichen Eiweissgehalten wie in Beispiel 3, jedoch mit einer festeren Konsistenz, vergleichbar mit der Konsistenz von Rindsplasmakoagulaten bei entsprechendem Eiweissgehalt.

Beispiel 5

Man verfährt wie in Beispiel 4 und friert das nach 1c) gewonnene Plasmakonzentrat mit 18,6 % Eiweiss nochmals 3 Tage bei −23 °C ein. Nach dem üblichen Auftauen und Zentrifugieren erhält man ein Schweinsplasmakonzentrat mit 22,5 % Eiweiss.

Beispiel 6

Man verfährt wie in Beispiel 3, erhitzt aber 30 kg Schweinsplasma bei einer Raumtemperatur von annähernd 100 °C während 7 Stunden auf eine Kerntemperatur von 95 °C und erhält nach der Arbeitsvorschrift 1c) ca. 10,5 kg Plasmakoagulat mit 18 % Eiweiss.

Beispiel 7

Man verfährt wie in Beispiel 6, hält aber die Kerntemperatur von 95 °C noch 2 Stunden und erhält nach Arbeitsvorschrift 1c) ca. 10,5 kg Plasmakoagulat mit 18,4 % Eiweiss von etwas festerer Konsistenz.

Beispiel 8

Man verfährt wie in Beispiel 3, erhitzt aber anstelle des Schweinsplasmas 30 kg gleich vorbehandeltes Schweinsblut mit ca. 17 % Eiweiss bei 92 °C Raumtemperatur während 5 1/2 Stunden auf eine Kerntemperatur von 88 °C und erhält nach Arbeitsvorschrift 1c) ca. 21 kg eines ca. 1,4-fach Konzentrates mit 24 % Eiweiss von dunkelbraunroter Farbe und fester, bröseliger Konsistenz.

4

Beispiel 9

Man verfährt wie in Beispiel 5, entwässert jedoch das bei −7 °C und −23 °C nach Arbeitsvorschrift 1c) gefrorene und aufgetaute Schweinsplasmakoagulat nicht durch Zentrifugieren, sondern auf einer Packpresse. Bei einer Schichtdicke von max. 5 cm und einem Druck von 200 kp/m² lassen sich bei ca. kirschgrossen Stücken Eiweisskonzentrationen von bis zu 30 % (ca. 4,5-fach Konzentrat) erreichen.

**Patentansprüche**

1. Verfahren zur Herstellung von Eiweisskonzentraten mit fester bis gelartiger Konsistenz aus tierischem Blut und/oder Blutplasma, dadurch gekennzeichnet, dass man tierisches Blut und/oder Blutplasma durch Erhitzen auf eine Kerntemperatur von 75 bis 100 °C vollständig koaguliert, danach möglichst rasch auf eine Kerntemperatur von ca. 0 °C abkühlt und das freigesetzte Wasser vom Koagulat abtrennt.

2. Verfahren nach Anspruch 1, dadurch gekennzeichnet, dass man das tierische Blut und/oder Blutplasma vor der Hitzekoagulation mit Nitritpökelsalz salzt und vorzugsweise mit Aromastoffen versetzt.

3. Verfahren nach Anspruch 1 oder 2, dadurch gekennzeichnet, dass man das Hitzekoagulat während einiger Zeit auf der Kerntemperatur von 75 bis 100 °C hält.

4. Verfahren nach einem der Ansprüche 1 bis 3, dadurch gekennzeichnet, dass man das auf eine Kerntemperatur von ca. 0 °C abgekühlte Hitzekoagulat nach Zerkleinern vom freigesetzten Wasser befreit.

5. Verfahren nach einem der Ansprüche 1 bis 3, dadurch gekennzeichnet, dass man das auf eine Kerntemperatur von ca. 0 °C abgekühlte Hitzekoagulat bei einer Temperatur von −5 bis −10 °C möglichst langsam einfriert und bei einer Temperatur von −5 bis −30 °C einige Tage bis vorzugsweise nicht länger als 6 Monate lang verpackt lagert und das durch die Hitzekoagulation und das Einfrieren freigesetzte Wasser nach Zerkleinern des aufgetauten Koagulats abtrennt.

6. Eiweisskonzentrat mit fester bis gelartiger Konsistenz, hergestellt mittels des Verfahrens nach Anspruch 1.

7. Eiweisskonzentrat nach Anspruch 6, hergestellt mittels des Verfahrens nach einem der Ansprüche 2 bis 5.

**Claims**

1. Method for obtaining solid or gel-like protein concentrates from blood and/or blood plasma of animal origin, consisting in thoroughly coagulating the animal blood and/or blood plasma by heating it to a core temperature of 75° to 100 °C, thereupon cooling it as quickly as possible down to a core temperature of about 0 °C and separating the freed water from the coagulum.

2. Method according to claim 1, consisting in curing the animal and/or blood plasma before heat coagulation with nitrite pickling salt and preferably adding flavours.

3. Method according to claim 1 or 2, consisting in maintaining the heat coagulum for some time at the core temperature of 75° to 100 °C.

4. Method according to one of the claims 1 to 3, consisting in separating from the freed water the heat coagulum cooled down at a core temperature of about 0 °C and crushed.

5. Method according to one of the claims 1 to 3, consisting in deep-freezing as slowly as possible, at a temperature of — 5° to — 10 °C, the heat coagulum cooled down to a core temperature of about 0 °C, then stocking it packed at a temperature of — 5° to — 30 °C for some days but preferably not more than 6 months and finally separating from the unfreezed and crushed coagulum the water freed by heat coagulation and deep freezing.

6. Solid or gel-like protein concentrate, obtained by means of the method according to claim 1.

7. Solid or gel-like protein concentrate according to claim 6, obtained by means of the method of one of claims 2 to 5.

**Revendications**

1. Procédé de fabrication de concentrés de protéines sous forme solide ou gélatineuse à partir de sang et/ou de plasma sanguin d'origine animale, consistant à coaguler entièrement le sang animal et/ou le plasma sanguin au moyen d'un traitement par la chaleur jusqu'à une température à cœur de 75° à 100 °C, puis à le refroidir le plus rapidement possible à une température à cœur de 0 °C environ et à séparer du coagulum l'eau libérée.

2. Procédé selon la revendication 1, consistant à saler le sang et/ou le plasma sanguin au sel nitrité pour saumure avant la coagulation par la chaleur et à l'additionner de préférence de substances aromatisantes.

3. Procédé selon la revendication 1 ou 2, consistant à maintenir le coagulum durant quelque temps à une température à cœur de 75° à 100 °C.

4. Procédé selon l'une des revendications 1 à 3, consistant à libérer le coagulum de l'eau dégagée après l'avoir refroidi à une température à cœur d'environ 0 °C et l'avoir broyé.

5. Procédé selon l'une des revendications 1 à 3, consistant à congeler aussi lentement que possible, par une température de −5° à −10 °C, le coagulum refroidi à une température à cœur d'environ 0 °C, à le stocker ensuite emballé, à une température de −5° à −30 °C durant quelques jours et de préférence pas au-delà de 6 mois et à séparer finalement du coagulum décongelé et broyé l'eau libérée par la coagulation et la congélation.

6. Concentré de protéines sous forme solide ou gélatineuse, fabriqué au moyen du procédé selon la revendication 1.

7. Concentré de protéines selon la revendication 6, fabriqué au moyen du procédé selon l'une des revendications 2 à 5.